# EUROPEAN PATENT SPECIFICATION

(11) **EP 1 661 064 B1**
(45) Date of publication and mention of the grant of the patent: **07.03.2007**
(21) Application number: 04729438.4
(22) Date of filing: 26.04.2004
(51) Int. Cl.: G06K 9/20, G06F 17/30

(54) **DOCUMENT SCANNER**
DOKUMENTENSCANNER
LECTEUR OPTIQUE POUR DOCUMENTS

(30) Priority: 20.08.2003 EP 03077643; 20.08.2003 EP 03077644
(43) Date of publication of application: 31.05.2006
(73) Proprietor: Océ-Technologies B.V., 5914 CC Venlo (NL)
(72) Inventor: JAGER, Jodocus, Franciscus, NL-6538 ZK Nijmegen (NL)
(74) Representative: van Meeteren, Arend Anthonie
(86) International application number: PCT/EP2004/004505
(87) International publication number: WO 2005/020131

(56) References cited:
- EP-A- 1 109 125
- EP-A- 1 136 938
- EP-A- 1 256 900
- US-B1- 6 323 876
- NEWMAN W ET AL: "CamWorks: a video-based tool for efficient capture from paper source documents" MULTIMEDIA COMPUTING AND SYSTEMS, 1999. IEEE INTERNATIONAL CONFERENCE ON FLORENCE, ITALY 7-11 JUNE 1999, LOS ALAMITOS, CA, USA,IEEE COMPUT. SOC, US, 7 June 1999 (1999-06-07), pages 647-653, XP010519463 ISBN: 0-7695-0253-9
- SOBOTTKA K ET AL: "Identification of text on colored book and journal covers" DOCUMENT ANALYSIS AND RECOGNITION, 1999. ICDAR '99. PROCEEDINGS OF THE FIFTH INTERNATIONAL CONFERENCE ON BANGALORE, INDIA 20-22 SEPT. 1999, LOS ALAMITOS, CA, USA,IEEE COMPUT. SOC, US, 20 September 1999 (1999-09-20), pages 57-62, XP010351263 ISBN: 0-7695-0318-7

## Description

The invention generally relates to document scanning, more in particular to a method of converting a document image into image data including pixels, each having a value representing the intensity and/or color of a picture element, wherein said document image includes text layout elements such as words or groups of words. The invention also relates to a scanning apparatus adapted to perform the method and a computer program product for performing the method when executed in a processor.

When a scan file of image data is generated by a scanner, a file name must be defined to make possible that the file be retrieved. Normally, in large systems, where scanners are autonomous devices connected to a network, a scanner automatically generates a file name for a scan file. The file name is synthesized from variables available to the device, such as a scanne-id, a date and a time, but the system cannot make a file name that is materially related to the scanned document. Also, autonomous scanners often do not have a complete keyboard, so that it is not possible for an operator to type in a meaningful file name at the scanner location during the scan process. Therefore, it may later be difficult to recognize the scan file, especially in the case that a large number of documents have been scanned.

It is an object of the present invention to provide an easy way of defining a meaningful file name for a scan file. With regard to sophisticated scanner apparatus that are able to produce an e-mail message incorporating the scan file (e.g. by attachment), it is also an object of the invention to provide an equally easy way of defining a file designator in the "subject" field of the e-mail message, so that the message may be easily recognized upon arrival as carrying the scan file.

This object is achieved by a method as described in claim 1. According to the invention, the scanned image is shown to the operator on a display screen and the operator is enabled to point at a word or combination of words (generally, text layout elements), which may, at the operator's wish, be more descriptive of the contents of the document, e.g. a title, an author, a document type, a keyword, a (short) abstract of the contents, etc.

In reaction to the operator's selection, the system extracts the selected image information from the scanned image and converts it into coded text by OCR. The extracted text is then automatically converted into a file designator by the system, such as a file name or a subject name for an e-mail message containing the scan file.

The layout element to be used as a file designator, which element has been extracted from the document image, will further also be called "metadata", since it originates from the image data of the document and is specifically used as information about the document, e.g. a meaningful file name.

When documents are in digitally encoded form, such as MS WORD^{™} documents, metadata can be automatically identified by dedicated programs that scan the document and extract preprogrammed keywords. However, documents that are available as images, i.e. compositions of black (coloured) and white pixels, must first be converted into digitally encoded form by OCR, a process that needs much computing power and yet does not always work properly. Also the indexing program takes quite some time to process a document.

Automatically interpreting document images is known for heavily structured documents, such as patent documents. Such documents have a strictly prescribed form and a computer can be programmed for finding and processing particular predetermined information items in the document image. Free form documents, however, cannot be processed in this way.

Human operators have the advantage that they can easily oversee a document image and find relevant items in it. It would thus be advantageous to let an operator select metadata in the document image, that are then automatically extracted and associated to the scan file as a designator by a computer system.

Methods for extracting metadata per se (i.e., not for composing a file name for the associated scan file, but for editing purposes) are known in the prior art.

EP 1 256 900 discloses a system for rapidly entering scanned digital document images into a database, including designating metadata in the displayed image for retrieval purposes, by an operator. The operator must draw an "envelope" around the metadata item in the image with a mouse or the like. Then, the system converts the bitmap image information contained in the envelope into text format by OCR.

US 6 323 876 discloses a system for scanning documents that automatically discriminates image regions, such as text blocks, in the scanned document image. Then, the scanned image is shown on a display and any one image region may be selected by an operator by pointing in the displayed image.

Another method of extracting metadata from a document is known from EP 1 136 938. Documents are first scanned to generate an image of pixels using a scanner connected to a computer. The scanned documents have a structured layout in which text strings representing metadata are positioned in boxes, which boxes enclose the text strings by drawn lines. In particular, technical drawings have such boxes containing metadata such as title, dates, versions, etc. The user operates a pointing member of the computer to designate an arbitrary point in at least one box of the documents. After designating the point by the user, the box containing the point is identified by detecting the surrounding lines. Subsequently the characters in said box are recognized by optical character recognition (OCR) so as to retrieve the metadata and store it in a database connected to the computer to enable documents scanned in this way to be indexed. Hence the boxed structure of the metadata is assumed for identifying the metadata.

Other methods of extracting text from scanned document images for editing or indexing purposes are disclosed in EP 1 256 900 and in NEWMAN W et al.: "Camworks: a video-based tool for efficient capture from paper source documents", Multimedia Computing and Systems, 1999, IEEE International Conference on Florence, Italy, 7-11 June 1999, Los Alamitos, CA, USA, IEEE Comp. Soc., pp. 647-653.

Automatic determination of an extraction area in reaction to an operator indicating a selection point within the scanned image may be done in several ways.

A first example of such a process is based on the results of a preliminary automatic segmentation of the image (or at least part of it) into layout elements, such as words or lines. Methods of segmenting document images into layout elements are known per se, e.g. a method disclosed in applicants patent US 5, 856,877 or the metjod disclosed in Newman et al. referred to supra. The segmentation results are stored in the memory of the device, but not shown to the operator, in order not to confuse him.

Via a user interface, such as a touch screen or a mouse, the user indicates in the displayed portion of the document image the word he intends to use as a file designator. In reaction, the indicated layout element is automatically selected and a corresponding proposed extraction area completely covering the layout element is determined and displayed.

The initial automatically determined extraction area may be adjusted by the operator, e.g. by indicating at least a further selection point in a further metadata element to be included in the extraction area, in which case the system automatically increases the extraction area to additionally include the further metadata element and any elements in between.

A second example of an extraction area determination process starts with automatically classifying pixels as foreground pixels based on their values having a foreground property, and then determining the extraction area based on foreground pixels connected, with respect to a predetermined connection distance, to a foreground pixel indicated by the selection point. In particular, this method comprises:
- including the foreground pixel indicated by the selection point,
- progressively including further foreground pixels that are within the connection distance from other foreground pixels included in the connected region, and
- setting the extraction area to an area completely enclosing the connected region.

The automatically determined extraction area may again be adjusted by the operator, e.g. indicating a further selection point, or performing a supplementary user control event such as clicking a mouse button or operating a mouse wheel. In the latter case, the connection distance may be increased by, e.g., one pixel at every click.

Although two extraction methods have been described in detail above, the invention is not limited to using these methods. Other methods giving similar results can also be used in the present Invention and may give satisfactory results.

In this description, a document image may comprise a plurality of physical document pages. In general, the part of the document shown on the display is the first page image, since normally that is the page containing the most information that is relevant for metadata extraction. It is, however, contemplated by the inventors to provide the apparatus with a browsing function to navigate through the entire document image, that is, through the plurality of physical document pages.

Further preferred embodiments of the device according to the invention are given in the further claims.

These and other aspects of the invention will be apparent from and elucidated further with reference to the embodiments described by way of example in the following description and with reference to the accompanying drawings, in which
Figure 1 shows a scanned document and a metadata extraction area,
Figure 2 shows a device for processing a document and extracting metadata,
Figure 3 shows a flow chart of a process for extracting metadata according to a first exemplary method,
Figure 4a shows a segmentation result,
Figure 4b shows a detail of a segmentation result,
Figure 5 shows a flow chart of a process for extracting metadata according to a second exemplary method,
Figures 6a, 6b an 6c show growing a region from the selection point,
Figure 7 shows adapting a metadata extraction area, and
Figure 8 shows adapting the shape of a non rectangular extraction area.
The figures are diagrammatic and not drawn to scale. In the figures, elements which correspond to elements already described have the same reference numerals.

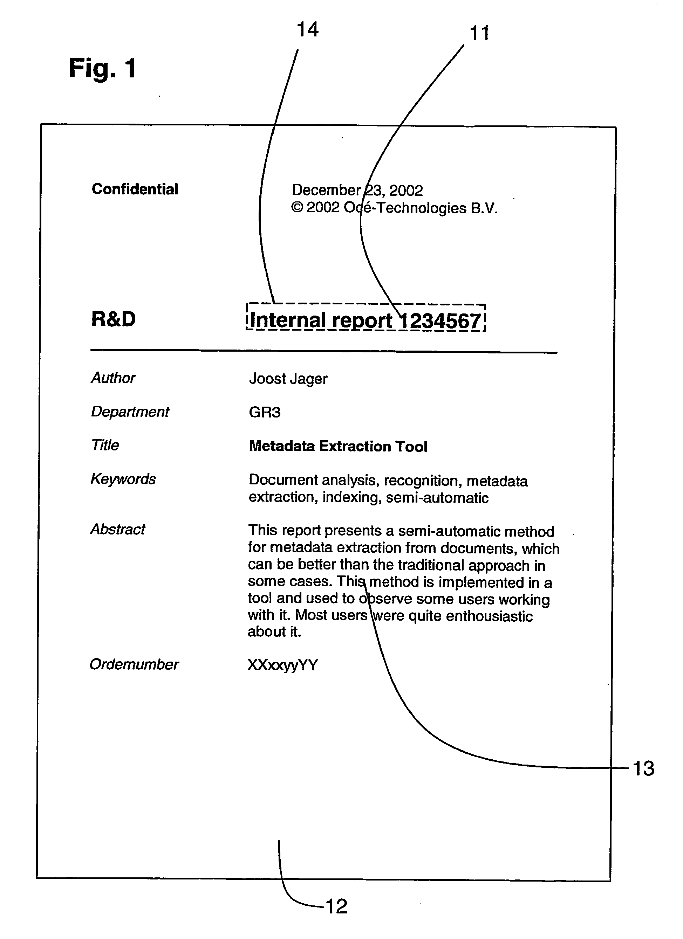

Figure 1 shows a scanned document and a metadata extraction area. A document 13 has been scanned to generate an image of pixels. The pixels (short for picture elements) are a numerical representation of the document, and have values representing the intensity and/or color of the picture elements. A part of the Image is shown on a display 12 (schematically drawn) for a user to interactively determine metadata to be used for generating a file designator, e.g. a file name. An image file of a document may contain separate images for each page of the document. A title page, usually the first page, contains relevant information about the contents of the document, such as title, document type author, publication date, etc. Such information is called metadata in this description. The user may have the option to manipulate the display for showing the relevant part of the image or image file, e.g. by scrolling. Alternatively the display may show a full page of a single page document.

An example of a metadata element is a document number 11, which is part of the type of the document. The metadata element may be a single word, such as the document number 11, a plurality of words, or even one or more text lines, within the restrictions of the application. For example the abstract shown in Figure 1 contains about 6 lines of text.

On the display 12 an extraction area 14 is shown around the document type including the document number 11. The extraction area is an area of the image that is to be used by a processing unit for finding the metadata, and recognizing the metadata. In the context of the present invention, the metadata is text, and the extraction area is analyzed for recognizing the characters and words, which is commonly known as optical character recognition (OCR).

For constructing the extraction area the user indicates a selection point in the metadata element that he considers relevant, for example the document number 11. Indicating the selection point is the first step in a selection command. For indicating the selection point the display may be accommodated on a sensitive screen such as a touch screen. The user may indicate the selection point using a finger, or using a dedicated pointing stick. Alternatively the display may show a cursor that is controlled by the user, e.g. by a mouse, trackball or the like. The selection point may then be indicated by positioning the cursor and activating a button, such as a mouse click.

After the selection point has been indicated by the user the extraction area is determined by the layout element (word) containing the selection point, or the one closest to the selection point. There are many ways in which that layout element can be found, and two of them are described in detail below. However, the present invention is not limited to the methods of determining the layout elements indicated by the operator described herein.

If the location of the selection point is in a background area the system may decide that the user does not want to select a layout element. In an embodiment the system may decide that the user intends to select the nearest layout element, if the distance to the nearest layout element is within a predetermined limit. If the selection point is on a background pixel far away from foreground points the system may consider this selection as a command to cancel a currently selected metadata extraction area.

Based on the layout element (word) that Is determined by the selection point, an extraction area is drawn around the layout element and displayed to the user, e.g. a box or a colored area. The user may confirm the proposed area or may alter the proposed extraction area as described below. Finally metadata is extracted by processing the pixels in the extraction area. A file name for the scan file may then be generated automatically, either in the form of the word or words extracted, or in the form of a combination of the word or words extracted and automatically added system information, such the date and/or time, etc.

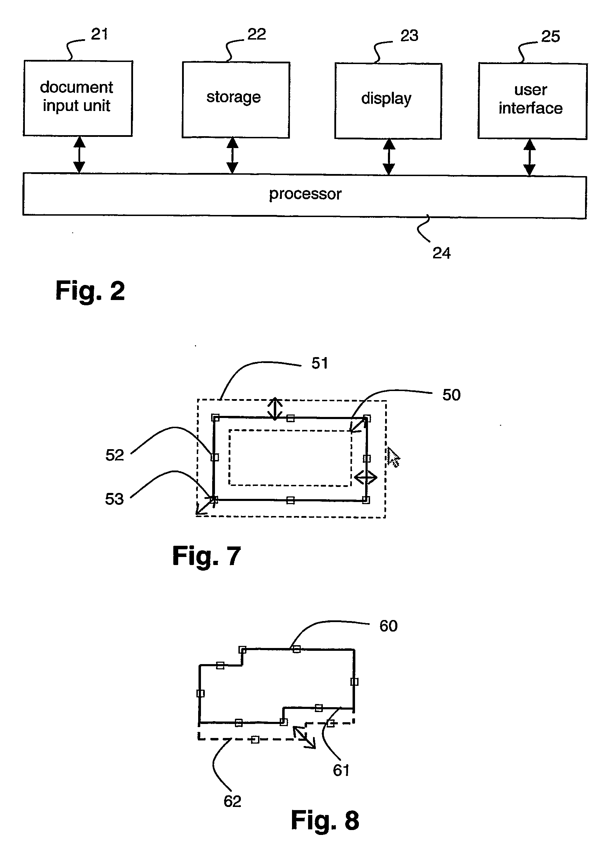

Figure 2 shows a device for processing a document and extracting metadata according to the present invention. The device has an input unit 21 for entering a digital image, comprising a scanning unit for scanning an image from physical documents such as an electro-optical scanner. The input unit 21 is coupled to a processing unit 24, which cooperates with a storage unit 22. The storage unit may include a recording unit for storing the image and/or metadata on a record carrier like a magnetic tape or optical disk. The processing unit may comprise a general purpose computer central processing unit (CPU) and supporting circuits that operates using software for performing the metadata extraction as described above. The processing unit is coupled to a user interface 25 provided with at least a pointing unit for indicating a selection point on the image. The user interface may include control means such as a keyboard, a mouse device or operator buttons. The processing unit is coupled to a display unit 23. The display unit comprises a display screen for displaying the image and the extraction area as explained above with Figure 1. In particular the display unit and the pointing unit may be embodied by a touch screen sensitive to the user pointing to the metadata element in the displayed image with a finger for indicating the selection point. The processing unit may be coupled to a printing unit for outputting a processed image or metadata on paper. The scan file generated by the input unit 21 is given a file name based on the extracted metadata and may for instance be stored in a database, for example in the storage unit 22 or in a separate computer system.

It is noted that the device may be constructed using standard computer hardware components, and a computer program for performing the metadata extraction process as described below. Alternatively the device may be a dedicated hardware device containing a scanning unit, a processing unit and a display to accommodate the metadata extraction. Furthermore the scanning process may be detached from the interactive process of metadata extraction, e.g. a scanning unit in a mail receiving room may be coupled via a LAN to an indexing location having the display and operator.

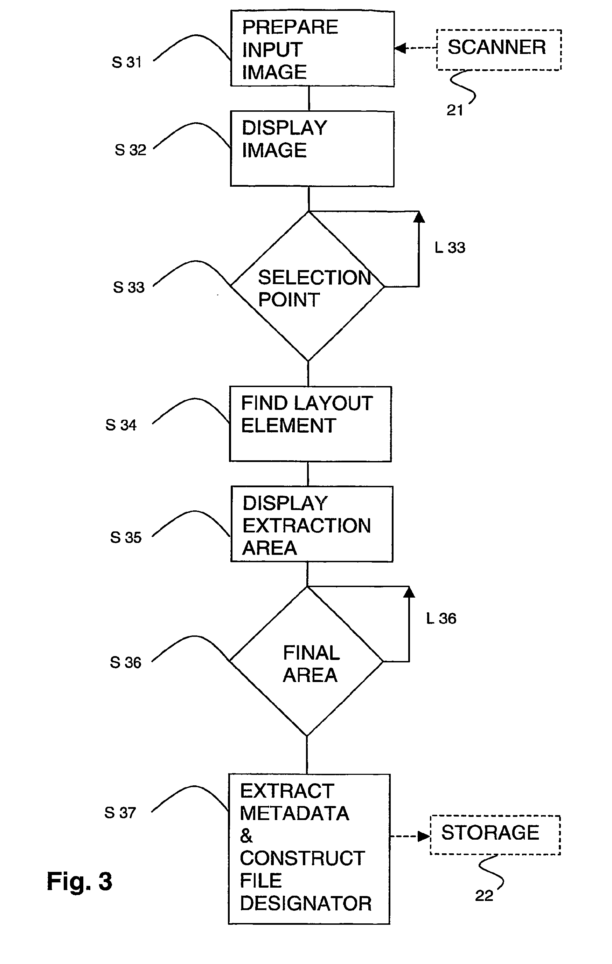

Figure 3 shows a flow chart of a process for extracting metadata according to a first exemplary method. This method first segments the image into layout elements, such as words and lines, based on the pixel values, and handles the complete determination of the extraction area on the level of layout elements.

According to this method, pixels are classified as foreground pixels based on the values having a foreground property, usually the value representing black on a white background document. In a color image the foreground property may be the value representing a specific color, e.g. a color interactively determined from the color of the pixel indicated by the selection point.

Segmenting an image into layout elements is a step known per se in image processing. For example, in US 5,856,877 a method for segmenting an image is described. The segmenting may be performed before the image is displayed for the user, or may be started as soon as processing power is available in the system, e.g. as a background process during displaying the document to the user. Segmentation may also be performed in reaction to the indication of a selection point by the user, and then be limited to an area relatively close to the indicated point only. It is to be noted that the segmentation result is not shown to the user. Hence the segmentation need not be finished, and the user will experience a quick document display by the system after scanning a document. Also, the user is not disturbed by boxes or other delimiting elements all over the displayed document image.

In an embodiment the segmenting process is focused on an area around the selection point, e.g. only performed on an area of the image that is actually displayed for the user. It is to be noted that the user may first select an area of interest by scrolling the document. Alternatively the segmenting may be selectively performed after the user has indicated the selection point.

Returning to Figure 3, in a first step PREPARE INPUT IMAGE S31 the image is received from the scanning device, as a digital file of pixel values. The step may include further image processing based on predetermined knowledge or detected properties of the image, such as enhancing the contrast, determining foreground and or background properties from global statistics of the image, rotating the image, etc. In addition the step may include segmenting the image into layout elements. However it is noted that the segmenting need not be complete before the image is displayed, but may continue as a background process until the layout elements are needed in step FIND LAYOUT ELEMENT S34. Alternatively a segmentation result may be determined as a preparatory step in a separate image processing system.

In a next step DISPLAY IMAGE S32 the image is shown to a user on a display. The step may include finding a relevant part of the image to display, e.g. from a page starting with a large white area displaying the part that has the first text lines. In a next step SELECTION POINT S33 a user action is expected to indicate a selection point in the image, in particular in a metadata element. A symbolic waiting loop L33 in the drawing indicates that the system waits for a user action.

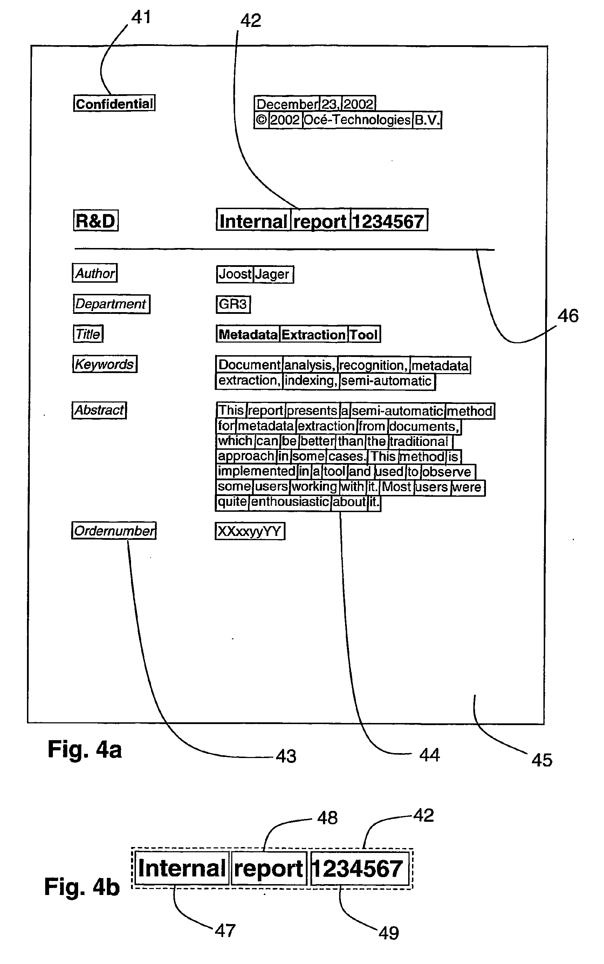

In a next step FIND LAYOUT ELEMENT S34 the segmented image is processed to find the layout element the user intended for extracting metadata. The selection point indicates which layout element has been selected as explained below with Figure 4. In a next step DISPLAY EXTRACTION AREA S35 an extraction area is displayed that covers the selected layout element. The extraction area may be shown as a rectangle, a highlighted area, or any other suitable display feature, just containing the layout element.

It is noted that the user may actively enter a selection point, e.g. by clicking a mouse button when the cursor is on the desired metadata element, or by putting a finger on a touch screen. However, the system may also automatically display a proposed extraction area as soon as the user positions a pointer element (such as a cursor) near a foreground object, or after a predetermined (short) waiting time thereafter. In the automatic mode the steps SELECTION POINT S33, FIND LAYOUT ELEMENT S34 and DISPLAY EXTRACTION AREA S35 are combined. The cursor may be shown as a specific symbol indicating the automatic mode, e.g. by adding a small rectangle to the cursor symbol. The user can determine the selection point based on the visual feedback of the proposed extraction area.

Based on the displayed extraction area the user can verify that the extraction area covers the metadata elements that he intended. In a next step FINAL AREA S36 the user confirms the displayed extraction area, e.g. by a mouse command or implicitly by entering a next document.

The user may also, as shown with symbolic loop L36, adapt the proposed extraction area as explained with reference to Figures 7 or 8. For example the user may indicate a second point that must also be included in the extraction area, or the user indicates an extension of the proposed extraction area by dragging the pointing element from the selection point in a direction that he intends to extend the extraction area. The display may show the final area in response to the adaptation.

In a next step EXTRACT METADATA S37 the finally confirmed extraction area is processed to detect and recognize the metadata elements, such as words via OCR. The result is converted into a scan file designator, such as a file name, which may be shown on the display in a text field. The scan file can then be stored in the storage uit 22 using the file designator.

Figure 4a shows a segmentation result. It is to be noted that the segmentation result is not shown to a user, but is available internally in the processing system only. The image shown in Figure 1 is used as an example. Segmentation has resulted in detecting many layout elements. The process basically detects individual words, e.g. the words indicated by rectangles 41 and 43, and further all groupings of words, such as lines, e.g. the line indicated by rectangle 42 and text blocks, e.g. the text block indicated by rectangle 44.

Intermediate areas having substantially only background pixels are classified as background 45. Predetermined 'non-text' elements, such as black line 46, may also be classified as background, or at least non-selectable elements. The user indicates a selection point by positioning a pointing element such as a cursor near or on the metadata element he wants to have extracted. Then an extraction area is determined that completely covers the layout element. The extraction area is displayed for the user, who can confirm the proposed extraction area. The user may decide that the extraction area is too small, too large, etc. In that case the user may supplement his selection command as described below.

Figure 4b shows a detail of a segmentation result. It comprises a first layout element, corresponding to the first word, indicated by a first rectangle 47; a second layout element, corresponding to the second word, indicated by a second rectangle 48; and a third layout element is segmented, i.e. corresponding to the number in the document type, indicated by a third rectangle 49.

Also, the segmentation process has detected the combination of the three word elements, namely the line indicated by rectangle 42.

Upon indicating, by the user, a selection point in the third rectangle 49 the system will display a small extraction area only surrounding the document number.

When the user now clicks (mouse) or taps (touch screen) on the proposed extraction area, the process automatically selects the next higher level layout element, in this example the 'line' in rectangle 42. A further higher level, although not present in this particular example, would be a text block (paragraph). Alternatively, clicking may result in progressively expanding the selection area by adding words, e.g. in the reading direction. I the example of Fig. 4b, the user would start by pointing at the word in rectangle 47, and successive clicking (tapping) would successively add the words in rectangles 48 and 49, respectively.

A different mouse click (e.g. using the right-hand button instead of the left-hand button on the mouse), may progressively decrease the selected area, either in levels or in words.

In an alternative way of expanding the selection area, the user may indicate a second selection point in a further layout element in the image, for example by pointing to a new location in rectangle 48. The new layout element may simply be added to the original layout element. If there are intermediate layout elements, the user most likely wants that the intermediate elements are included also. For example if the second selection point is in the first rectangle 47, all three rectangles 47,48,49 are combined in the extraction area.

The user may also change the extraction area by dragging the cursor in the direction of the first rectangle 47 (towards the left edge of the paper). The system derives a command to additionally connect layout elements from this move, and connects the next rectangle 48 to constitute a new extraction area surrounding the neighboring rectangles 48, 49. The connecting may be applied for layout elements that are within a connection distance. The connection distance is used to select layout elements that are to be combined to a selected layout element, i.e. background between the layout elements is less than the connection distance. The connection distance may be defined as the shortest Euclidian distance between the borders of the layout elements, or as a distance in horizontal (x) or vertical direction (y) between points of the layout elements having the closest x or y coordinates. The threshold distance for connecting layout elements may be a predefined distance, e.g. somewhat larger than a distance used during segmenting for joining picture elements having intermediate background pixels. The supplement to the selection command may also be translated into a user-defined connection distance, e.g. the connection distance may be derived interactively from the distance that the user moves the cursor. In an embodiment the user may click or point to the same location repeatedly for increasing the connection distance by predefined amounts, or he may operate a mouse wheel to gradually increase or decrease the connection distance.

The connection distance may be different for different directions. For example the connection distance in horizontal direction may be larger then the connection distance in vertical direction. For common text documents this results in robustly connecting characters to words, and words to a text line, without connecting the text line to the next or previous line. In a preprocessing step a reading direction may be determined, e.g. by analyzing the layout of background pixels. The connection distance may be based on the reading direction, e.g. left to right, and from the selection point to the right the connection distance may be larger.

In an embodiment of the connection process the connection distance is adapted in dependence of a selection direction received via the supplement to the selection command. The proposed extraction area is displayed for the user, and the user will easily detect that the extraction area is to be extended in a specific direction. The user may indicate the selection direction by dragging a selection item (cursor, or a finger on a touch screen) from the selection point in the selection direction.

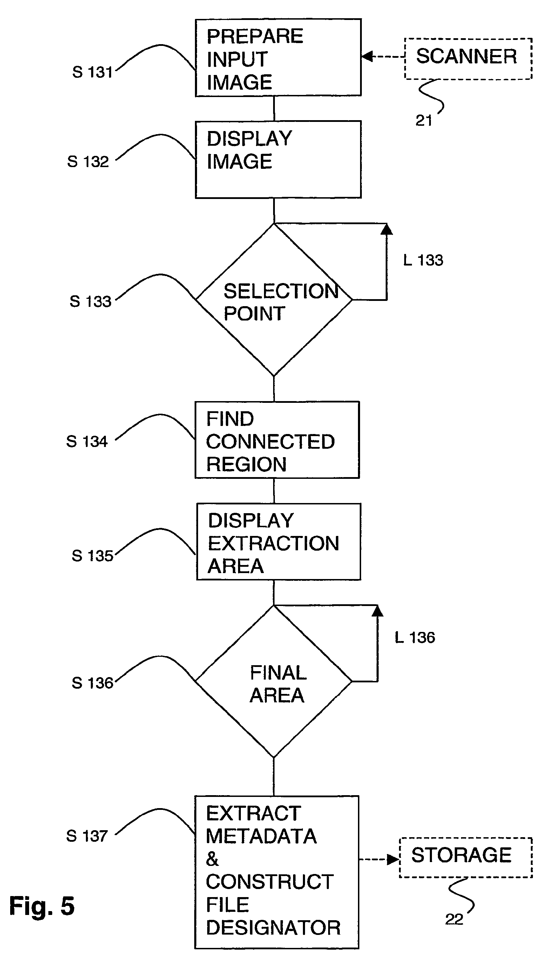

Figure 5 shows a flow chart of a process for extracting metadata according to a second exemplary method. In this method, the determination of the operator-indicated layout element, and therewith the extraction area, is entirely performed on pixel level.

Pixels are classified as foreground pixels based on the values having a foreground property, usually the value representing black on a white background document. In a color image the foreground property may be the value representing a specific color, e.g. a color interactively determined from the color of the pixel indicated by the selection point, or a color different from the background color. Methods for distinguishing foreground and background pixels are well-known in the art.

A first foreground pixel is found indicated by the selection point, i.e. the foreground pixel corresponding to the location of the selection point or close to the selection point if the selection point is on a background pixel in the metadata element. If the selection point is on a background pixel within a predefined distance of foreground points the system may consider the indicated pixel as a foreground pixel for the purpose of finding pixels constituting the intended metadata element, i.e. (re-)classify the selection point as a foreground pixel due to the fact that it has been indicated by the user. Alternatively, the system may select the closest foreground pixel as selection point. If the selection point is on a background pixel far away from foreground points the system may consider this selection as a command to cancel a currently selected metadata extraction area.

Based on the first foreground pixel a region of pixels is detected and assumed to be part of metadata, and an extraction area is drawn around the region and displayed to the user. Metadata is extracted by processing pixels in the extraction area, and converted into a scan file designator.

Returning to Figure 5, in a first step PREPARE INPUT IMAGE S131 the image is received from the scanning device, as a digital file of pixel values. The step may include further image processing based on predetermined knowledge or detected properties of the image, such as enhancing the contrast, determining foreground and or background properties from global statistics of the image, rotating the image, etc. Also, this step may include preparing an additional input image having a lower resolution for use in the image analysis of step S134 (to be explained below). Since the scanned image has a fairly high resolution, a moderate lowering of the resolution, e.g. with a factor 2 to 4, will normally not worsen the analysis, while it reduces the required processing power. The original high resolution input image will still be used for the display and data extraction purposes.

In a next step DISPLAY IMAGE S132 the image is shown to a user on a display. The step may include finding a relevant part of the image to display, e.g. from a page starting with a large white area displaying the part that has the first text lines. In a next step SELECTION POINT S133 a user action is expected to indicate a selection point in the image, in particular in a metadata element. A symbolic waiting loop L133 in the drawing indicates that the system waits for a user action.

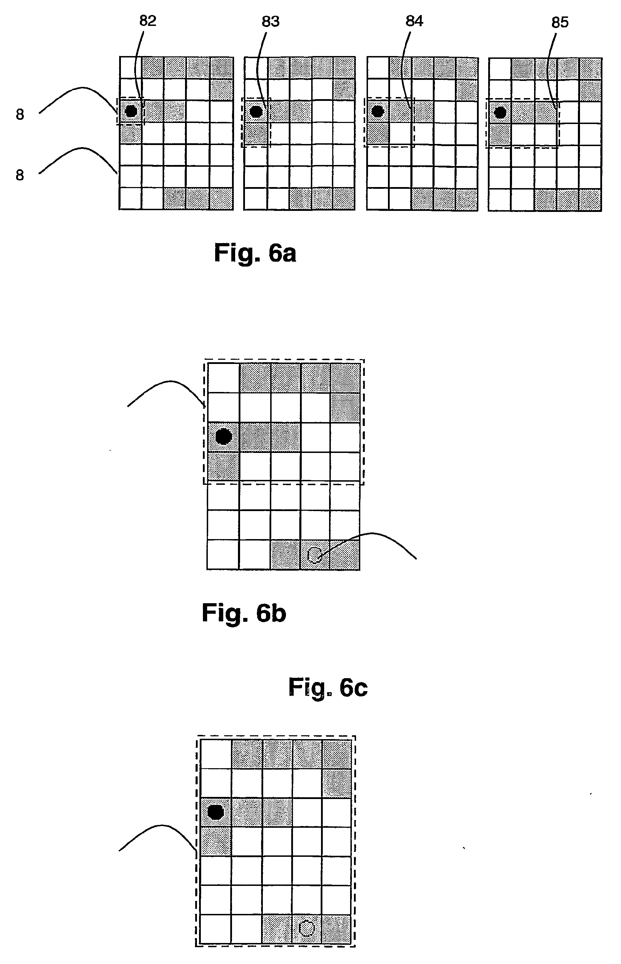

In a next step FIND CONNECTED REGION S134 the pixels around the selection point are analyzed to find the foreground pixels which are within a connection range as explained below with Figure 6. In a next step DISPLAY EXTRACTION AREA S135 an extraction area is displayed that covers the connected region. The extraction area may be shown as a rectangular area just containing the connected region, a highlighted area, or any other suitable display feature.

It is noted that the user may actively enter a selection point, e.g. by clicking a mouse button when the cursor is on the desired metadata element, or by putting a finger on a touch screen. However, the system may also automatically display a proposed extraction area as soon as the user positions a pointer element (such as a cursor) near a foreground object or after a predetermined (short) waiting time. In the automatic mode the steps SELECTION POINT S133, FIND CONNECTED REGION S134 and DISPLAY EXTRACTION AREA S135 are combined. The cursor may be shown as a specific symbol indicating the automatic mode, e.g. by adding a small rectangle to the cursor symbol. The user can determine the selection point based on the visual feedback of the proposed extraction area.

Based on the displayed extraction area the user can verify that the extraction area covers the metadata elements that he intended. In a next step FINAL AREA S136 the user confirms the displayed extraction area, e.g. by a mouse command or implicitly by entering a next document.

The user may also, as shown with a symbolic loop L136, adapt the proposed extraction area as explained with Figures 7 or 8. For example the user may indicate a second point that must also be included in the extraction area, or the user indicates an extension of the proposed extraction area by dragging the pointing element from the selection point in a direction that he intends to extend the extraction area. The display may show the final area in response to the adaptation.

In a next step EXTRACT METADATA S137 the finally confirmed extraction area is processed to detect and recognize the metadata elements, such as words via OCR. The result may be shown on the display in a text field. The result is converted into a scan file designator, such as a file name, which may be shown on the display in a text field. The scan file can then be stored in the storage uit 22 using the file designator.

Figures 6a, 6b and 6c show growing a region from the selection point. The user indicates the selection point in the image, and then a region is formed as follows. A starting foreground pixel is selected at the selection point. If the selection point is on a background pixel, but within a predefined distance from a foreground pixel, that foreground pixel may be used as a starting pixel.

Figure 6a shows region growing with a connection distance of one pixel. A detailed part of an image 81 is shown in four region growing phases, individual pixels showing as white (background) or grey (foreground). The user has indicated a selection point 80 indicated by a black dot. The region growing starts at the pixel corresponding to the selection point 80, and initially a starting region 82 of just one pixel is shown. The connection distance for the growing is assumed to be one pixel, i.e. no intermediate background pixels are allowed. In the second growing phase a second region 83 is shown extending downward for including directly connected pixels. In a third growing phase a third region 84 is shown extending to the right for including directly connected pixels. In a fourth growing phase a fourth region 85 is shown again extending to the right for including directly connected pixels. As no further foreground pixels are within the connection distance (= 1), the region growing stops. It is to be noted that a rectangular area is drawn as a dashed line around the growing regions 82, 83, 84 and 85. The area includes also background pixels. After finalizing the region growing process the drawn area can be the proposed extraction area.

Figure 6b shows region growing with a connection distance of two pixels. The same detail of an image as in Figure 6a is shown. The connection distance is increased to 2 pixels, and therefore single intermediate background pixels will be bridged. The resulting rectangular area 86 contains the foreground pixels having a connection distance of two. The user may confirm the resulting area, or may decide that the rectangular area is too small. In that case the user supplements his selection command. Thereto the user may indicate a second selection point 87 in a further foreground part of the image, for example by pointing to the new location or dragging from selection point 86 to second selection point 87. The supplement to the selection command is translated by the processing unit 24 into a larger connection distance that is just suitable for adding the second selection point 87 to the selection area. This may result in the selection area being enlarged in other directions as well.

In an embodiment the user may click or point to the same location repeatedly for increasing the connection distance. With every mouse click or tap on the touch screen the connection distance is increased by one pixel, or by a predetermined plurality of pixels. Also, the increase of the connection distance may be in steps that have the effect of actually increasing the extraction area. In case a mouse is used, clicking different buttons on the mouse may be coupled to increasing and decreasing the connection distance, respectively.

Figure 6c shows region growing with a connection distance of three pixels. The same detail of an image as in Figure 6b is shown. The connection distance is increased to 3 pixels, and therefore up to two intermediate background pixels will be bridged. The resulting rectangular area 88 contains the second selection point 87. It is to be noted that the region growing process may also be adapted to the results achieved, or may include learning options, e.g. using a larger connection distance if the user in most cases needs to increase the region. Also, if a connected region below a predetermined size is found, the process may include increasing the connection distance automatically to achieve at least the predetermined size.

In a further embodiment of the region growing process the connection distance is different for different directions. For example the connection distance in horizontal direction may be larger then the connection distance in vertical direction. For common text documents this results in robustly connecting words in a text line, without connecting the text line to the next or previous line. In a preprocessing step a reading direction may be determined, e.g. by analyzing the layout of background pixels. The connection distance may be based on the reading direction, e.g. left to right, and from the selection point to the right the connection distance may be larger.

In an embodiment of the region growing process the connection distance is adapted in dependence of a selection direction received via the supplement to the selection command. The proposed extraction area is displayed for the user, and the user will easily detect that the extraction area is to be extended in a specific direction. The user may indicate the selection direction by dragging a selection item (cursor, or a finger on a touch screen) from the selection point in the selection direction. It is noted that the increase of the connection distance may be derived from the distance of the dragging from the first selection point.

The device may provide further options for adapting the shape of the extraction area determined in any of the exemplary methods described above.

Figure 7 shows adapting a metadata extraction area. Initially a rectangular extraction area 50 is displayed for the user. The shape of the extraction area can be changed by controllable elements 52, 53 of the proposed extraction area. The user may now move one of the controllable elements. The controllable elements are displayed for the user by additional symbols, e.g. small, squares added to the sides and edges of the extraction area 50. The user can for example drag the upper side of the extraction area 50. The result may be just extending the extraction region upwards. By manipulating the controllable edge 53 the corresponding left and lower sides are moved. Possible new positions of sides and edges may be displayed as dashed lines 51 during manipulation. After finally selecting the area, the new position of sides and edges will be shown as solid lines. It is noted that other visual elements may be applied for displaying the control options, such as colors, blinking, etc.

Figure 8 shows adapting the shape of a non rectangular extraction area. An extraction area 60 is shown which is constructed to select part of a text fragment. The selection starts at a word in the middle of a line, and ends also in the middle of a line. A column layout of the text is assumed. Vertical sides may be easily detected, and may even be non controllable by the user. The bottom side 61 has two horizontal parts and an intermediate vertical part. The bottom line 61 may be dragged to a new position 62 indicated by a dashed line. In particular the intermediate vertical part can be dragged to a location in the text lines after the last word to be included in the metadata.

After finally setting the extraction area the metadata can be extracted and processed by optical character recognition (OCR). Then, the extracted metadata is used for determining a filename to attach to a scanned document. The extraction area may be subject to any requirements of a filename, e.g. having a minimum and maximum length. The extraction process may include adapting the text string to be in conformity with file naming rules, such as eliminating forbidden characters and preventing using the same filename again. Further identifying data like a date or time may be added. A scanned document may be stored automatically using the constituted file name.

Although the invention has been mainly explained by embodiments using text elements representing the metadata in the digital image, the invention is also suitable for any representation of metadata information such as symbols, logos or other pictorial elements that can be categorized, such as portraits. It is noted, that in this document the use of the verb 'comprise' and its conjugations does not exclude the presence of other elements or steps than those listed and the word 'a' or 'an' preceding an element does not exclude the presence of a plurality of such elements, that any reference signs do not limit the scope of the claims, that the invention and every unit or means mentioned may be implemented by suitable hardware and/or software and that several 'means' or 'units' may be represented by the same item.

## Claims

1. Method of converting a document image into image data including pixels, each having a value representing the intensity and/or color of a picture element, wherein said document image includes text layout elements such as words or groups of words, the method comprising:
- scanning a document with a scanner apparatus, and thereby generating a scan file of image data,
- displaying at least part of the scanned image for a user,
- receiving from the user a selection command for an extraction area within the scanned image
- converting any graphical elements included in the extraction area into text layout elements by processing pixels, and
- extracting said text layout elements,
**characterized in that**
the selection command comprises indicating a selection point in a text layout element in the image, and is automatically followed by a step of automatically determining an extraction area within the scanned image based on said indicated selection point, and **in that** the method further comprises:
- including the extracted text layout element in a designator for the scan file.

2. Method as claimed in claim 1, wherein the designator is a file name.

3. Method as claimed in claim 1, wherein the designator is a subject name for an e-mail message containing the scan file.

4. Method as claimed in any one of claims 1 to 3, further including a pre-process step of automatically segmenting at least part of the scanned image into layout elements based on the values of pixels having a foreground property or a background property, but not displaying segmentation results,
and wherein
the step of automatically determining an extraction area within the scanned image is based on the results of the segmenting step.

5. Method as claimed in claim 4, further including receiving a supplement to the selection command, for adjusting the extraction area, in particular by the user indicating at least a further selection point in a further metadata element to be included in the extraction area.

6. Method as claimed in claim 4, further including adjusting the extraction area by automatically increasing or decreasing the size thereof upon a supplementary user control event such as clicking a mouse button or operating a mouse wheel.

7. Method as claimed in any one of claims 1 to 3, further including a step of automatically classifying pixels as foreground pixels based on their values having a foreground property,
wherein the step of automatically determining an extraction area within the image is based on foreground pixels connected, with respect to a predetermined connection distance, to a foreground pixel indicated by the selection point.

8. Method as claimed in claim 7, wherein determining the extraction area comprises automatically generating a connected region by:
- including the foreground pixel indicated by the selection point,
- progressively including further foreground pixels that are within the connection distance from other foreground pixels included in the connected region, and
- setting the extraction area to an area completely enclosing the connected region.

9. Method as claimed in claim 8, wherein the connection distance is set in dependence of a connection direction, in particular the connection direction being horizontal, vertical or an assumed reading direction.

10. Method as claimed in claim 7, 8 or 9, wherein the input document image is converted to a lower resolution and the steps of classifying pixels and of determining an extraction area are performed on the lower resolution image.

11. Method as claimed in claim 8, further comprising automatically adapting the connection distance in response to a supplement to the selection command, wherein the supplement to the selection command comprises the user indicating a further selection point.

12. Method as daimed in claim 8, further comprising automatically increasing or decreasing the connection distance in response to a supplementary user control event such as clicking a mouse button or operating a mouse wheel.

13. Scanning apparatus for scanning a document image including text layout elements such as words or groups of words, thereby generating a scan file of image data including pixels, each having a value representing the intensity and/or color of a picture element, comprising:
- a scanner (21) for scanning the document image and generating the scan file,
- a display (23) for displaying at least part of the image for a user,
- a user interface (25) for receiving from the user a selection command for an extraction area within the scanned document image
- a processing unit (24) operable for
- converting any graphical elements included in the extraction area into text layout elements by processing pixels
- extracting the text layout element by processing pixels,
**characterized in that** the processing unit (24) is also operable for
- automatically determining an extraction area within the scanned image based on a selection point indicated by the user in a text layout element in the image as part of the selection command, and
- including the extracted text layout element in a designator for the scan file.

14. Apparatus as claimed in claim 13, wherein the processing unit (24) automatically generates a file name for the scan file including the extracted layout element.

15. Apparatus as claimed in claim 13 or 14, wherein the processing unit (24) automatically generates an e-mail message including the scan file and includes the extracted layout element in the "subject" field of the message.

16. Apparatus as claimed in claim 13, wherein the processing unit (24) includes a pre-processing module for automatically segmenting at least part of the scanned image into layout elements based on the values of pixels having a foreground property or a background property,
and wherein
the processing unit (24) determines the extraction area within the scanned image on the basis of segmentation results of the pre-processing module.

17. Apparatus as claimed in claim 13, wherein the processing unit (24) automatically classifies pixels as foreground pixels based on their values having a foreground property, and
determines the extraction area within the image on the basis of foreground pixels connected, with respect to a predetermined connection distance, to a foreground pixel indicated by the selection point.

18. Computer program for, in connection with a document scanner apparatus, carrying out the method as claimed in any of claims 1 to 12.

19. Computer program, stored on a carrier, for, in connection with a document scanner apparatus, carrying out the method as claimed in any of claims 1 to 12.

## Patentansprüche

1. Verfahren zum Umwandeln eines Vorlagenbildes in Bilddaten, die Pixel enthalten, die jeweils einen Wert haben, der die Intensität und/oder Farbe eines Bildelements repräsentiert, wobei das Vorlagenbild Textlayout-Elemente wie etwa Wörter oder Gruppen von Wörtern enthält, welches Verfahren umfaßt:
- Einscannen eines Dokuments mit einer Scanvorrichtung und **dadurch** Erzeugen einer Scandatei der Bilddaten,
- Anzeigen wenigstens eines Teils des eingescannten Bildes für einen Benutzer,
- Empfangen eines Auswahlbefehls für ein Extraktionsgebiet innerhalb des eingescannten Bildes von dem Benutzer,
- Umwandeln etwaiger graphischer Elemente, die in dem Extraktionsgebiet enthalten sind, in Textlayout-Elemente durch Verarbeitung von Pixeln und
- Extrahieren dieser Textlayout-Elemente,
**dadurch gekennzeichnet, daß**
der Auswahlbefehl die Angabe eines Auswahlpunktes in einem Textlayout-Element in dem Bild einschließt und daß auf ihn automatisch ein Schritt der automatischen Bestimmung eines Extraktionsgebietes innerhalb des eingescannten Bildes auf der Grundlage des angegebenen Auswahlpunktes erfolgt, und daß das Verfahren weiterhin umfaßt:
- Einbeziehen des extrahierten Textlayout-Elements in einen Bezeichner für die Scandatei.

2. Verfahren nach Anspruch 1, bei dem der Bezeichner ein Dateiname ist.

3. Verfahren nach Anspruch 1, bei dem der Bezeichner eine Betreff-Bezeichnung für eine E-mail-Nachricht ist, die die Scandatei enthält.

4. Verfahren nach einem der Ansprüche 1 bis 3, mit einem Vorverarbeitungsschritt der automatischen Segmentierung wenigstens eines Teils des eingescannten Bildes in Layoutelemente auf der Grundlage der Werte von Pixeln, die eine Vordergrund- oder eine Hintergrundeigenschaft haben, ohne daß das Resultat der Segmentierung angezeigt wird,
wobei
der Schritt der automatischen Bestimmung eines Extraktionsgebietes innerhalb des eingescannten Bildes auf dem Resultat des Segmentierungsschrittes beruht.

5. Verfahren nach Anspruch 4, mit Empfang einer Ergänzung zu dem Auswahlbefehl, zur Anpassung des Extraktionsgebietes, insbesondere **dadurch**, daß der Benutzer wenigstens einen weiteren Auswahlpunkt in einem weiteren Metadaten-Element angibt, das in das Extraktionsgebiet einbezogen werden soll.

6. Verfahren nach Anspruch 4, mit Anpassung des Extraktionsgebietes durch automatische Vergrößerung oder Verkleinerung der Größe desselben auf eine ergänzende Benutzeraktion wie etwa einen Mausklick oder Betätigung eines Mausrades.

7. Verfahren nach einem der Ansprüche 1 bis 3, mit einem Schritt der automatischen Klassifizierung von Pixeln als Vordergrundpixel auf der Grundlage der Tatsache, daß ihre Werte eine Vordergrundeigenschaft haben,
wobei der Schritt der automatischen Bestimmung eines Extraktionsgebietes innerhalb des Bildes auf Vordergrundpixeln basiert, die unter Berücksichtigung einer vorbestimmten Verbindungsdistanz mit einem Vordergrundpixel verbunden sind, das durch den Auswahlpunkt angegeben wird.

8. Verfahren nach Anspruch 7, bei dem die Bestimmung des Extraktionsgebietes die automatische Erzeugung eines verbundenen Gebietes umfaßt, durch:
- Einbeziehen des durch den Auswahlpunkt angegebenen Vordergrundpixels,
- progressives Einschließen weiterer Vordergrundpixel, die innerhalb der Verbindungsdistanz zu anderen Vordergrundpixeln liegen, die in das verbundene Gebiet einbezogen sind, und
- Festlegen des Extraktionsgebietes auf ein Gebiet, das das verbundene Gebiet vollständig enthält.

9. Verfahren nach Anspruch 8, bei dem die Verbindungsdistanz in Abhängigkeit von einer Verbindungsrichtung festgelegt wird, wobei die Verbindungsrichtung insbesondere horizontal, vertikal oder eine angenommene Leserichtung ist.

10. Verfahren nach Anspruch 7, 8 oder 9, bei dem das eingegebene Vorlagenbild auf eine geringere Auflösung konvertiert wird und die Schritte der Klassifizierung von Pixeln und der Bestimmung eines Extraktionsgebietes an dem Bild mit der geringeren Auflösung erfolgen.

11. Verfahren nach Anspruch 8, mit automatischer Anpassung der Verbindungsdistanz als Reaktion auf eine Ergänzung zu dem Auswahlbefehl, wobei die Ergänzung zu dem Auswahlbefehl umfaßt, daß der Benutzer einen weiteren Auswahlpunkt angibt.

12. Verfahren nach Anspruch 8, mit automatischer Vergrößerung oder Verkleinerung der Verbindungsdistanz als Reaktion auf eine ergänzende Aktion des Benutzers wie etwa einen Mausklick oder Betätigung eines Mausrades.

13. Scanvorrichtung zum Scannen eines Vorlagenbildes, das Textlayout-Elemente wie etwa Wörter oder Gruppen von Wörtern enthält, um so eine Scandatei von Bilddaten zu erzeugen, die Pixel enthält, die jeweils einen Wert haben, der die Intensität und/oder Farbe eines Bildelements repräsentiert, mit:
- einem Scanner (21) zum Einscannen des Vorlagenbildes und zum Erzeugen der Scandatei,
- einem Display (23) zur Anzeige wenigstens eines Teils des Bildes für einen Benutzer,
- einer Benutzerschnittstelle (25) zum Empfang eines Auswahlbefehls für ein Extraktionsgebiet innerhalb des eingescannten Vorlagenbildes von dem Benutzer,
- einer Prozessoreinheit (24), die betreibbar ist, um
- etwaige graphische Elemente, die in dem Extraktionsgebiet enthalten sind, durch Verarbeitung von Pixeln in Textlayout-Elemente umzuwandeln und
- die Textlayout-Elemente durch Verarbeitung von Pixeln zu extrahieren,
**dadurch gekennzeichnet, daß** die Prozessoreinheit (24) auch dazu ausgebildet ist,
- auf der Grundlage eines Auswahlpunktes, den der Benutzer als Teil des Auswahlbefehls in einem Textlayout-Element in dem Bild angegeben hat, automatisch ein Extraktionsgebiet innerhalb des eingescannten Bildes zu bestimmten, und
- das extrahierte Textlayout-Element in einen Bezeichner für die Scandatei einzubeziehen.

14. Vorrichtung nach Anspruch 13, bei der die Prozessoreinheit (24) automatisch einen Dateinamen für die Scandatei erzeugt, der das extrahierte Layoutelement enthält.

15. Vorrichtung nach Anspruch 13 oder 14, bei der die Prozessoreinheit (24) automatisch eine E-mail-Nachricht erzeugt, die die Scandatei enthält, und das extrahierte Layoutelement in das "Betreff'-Feld der Nachricht aufnimmt.

16. Vorrichtung nach Anspruch 13, bei der die Prozessoreinheit (24) ein Vorverarbeitungsmodul zum automatischen Segmentieren wenigstens eines Teils des eingescannten Bildes in Layoutelemente auf der Grundlage der Werte von Pixeln aufweist, die eine Vordergrund- oder Hintergrundeigenschaft haben,
und wobei
die Prozessoreinheit (24) das Extraktionsgebiet innerhalb des eingescannten Bildes auf der Grundlage der Resultate der Segmentierung durch das Vorverarbeitungsmodul bestimmt.

17. Vorrichtung nach Anspruch 13, bei der die Prozessoreinheit (24) Pixel anhand der Tatsache, daß ihre Werte eine Vordergrundeigenschaft haben, automatisch als Vordergrundpixel klassifiziert und
das Extraktionsgebiet innerhalb des Bildes auf der Grundlage von Vordergrundpixeln bestimmt, die unter Berücksichtigung einer vorbestimmten Verbindungsdistanz mit einem durch den Auswahlpunkt angegebenen Vordergrundpixel verbunden sind.

18. Computerprogramm zur Ausführung des Verfahrens nach einem der Ansprüche 1 bis 12 in Verbindung mit einem Dokumentenscanner.

19. Computerprogramm zur Ausführung des Verfahrens nach einem der Ansprüche 1 bis 12 in Verbindung mit einem Dokumentenscanner, gespeichert auf einem Träger.

## Revendications

1. Procédé de conversion d'une image de document en données d'image comprenant des pixels, chacun ayant une valeur représentant l'intensité et/ou la couleur d'un élément d'image, dans lequel ladite image de document comprend des éléments de mise en page de texte, tels que des mots ou des groupes de mots, le procédé consistant à:
- balayer un document au moyen d'un appareil de lecture optique, et générer un fichier de balayage de données d'image par ce moyen,
- visualiser au moins une partie de l'image balayée pour un utilisateur,
- recevoir de l'utilisateur une commande de sélection d'une zone d'extraction à l'intérieur de l'image balayée,
- convertir les éléments graphiques incorporés dans la zone d'extraction en éléments de mise en page de texte en traitant les pixels, et
- extraire lesdits éléments de mise en page de texte,
**caractérisé en ce que** :
la commande de sélection comprend la désignation d'un point de sélection dans un élément de mise en page de texte de l'image et est automatiquement suivie d'une étape de détermination automatique d'une zone d'extraction à l'intérieur de l'image balayée basée sur ledit point de sélection indiqué, et **en ce que** le procédé consiste en outre à :
- incorporer l'élément de mise en page du texte extrait dans un indicateur pour le fichier de balayage.

2. Procédé selon la revendication 1, dans lequel l'indicateur est un nom de fichier.

3. Procédé selon la revendication 1, dans lequel l'indicateur est un nom d'objet pour un message de courriel (email) contenant le fichier de balayage.

4. Procédé selon l'une quelconque des revendications 1 à 3, comprenant en outre une étape de pré-traitement de segmentation automatique d'au moins une partie de l'image balayée en éléments de mise en page basés sur les valeurs des pixels à caractère de premier plan ou à caractère d'arrière plan mais non de visualisation des résultats de segmentation,
et dans lequel
l'étape de détermination automatique d'une zone d'extraction à l'intérieur de l'image balayée est basée sur les résultats de l'étape de segmentation.

5. Procédé selon la revendication 4, comprenant en outre la réception d'un complément ajouté à la commande de sélection pour ajuster la zone d'extraction, plus particulièrement par l'utilisateur qui désigne au moins un autre point de sélection dans un autre élément de métadonnée à incorporer dans la zone d'extraction.

6. Procédé selon la revendication 4, comprenant en outre l'ajustement de la zone d'extraction en augmentant ou en diminuant automatiquement la taille de celle-ci après une commande supplémentaire effectuée par l'utilisateur, tel qu'en cliquant sur une touche de souris ou en actionnant une molette de souris.

7. Procédé selon l'une quelconque des revendications 1 à 3, comprenant en outre une étape de classement automatique des pixels en tant que pixels de premier plan en se basant sur leurs valeurs à caractère de premier plan,
dans lequel l'étape de détermination automatique d'une zone d'extraction à l'intérieur de l'image est basée sur des pixels de premier plan connectés, par rapport à une distance de connexion prédéterminée, à un pixel de premier plan désigné par le point de sélection.

8. Procédé selon la revendication 7, dans lequel la détermination de la zone d'extraction comprend la génération automatique d'une région connectée en :
- incorporant le pixel de premier plan désigné par le point de sélection ;
- incorporant progressivement les autres pixels de premier plan qui sont englobés dans la distance de connexion par rapport aux autres pixels de premier plan incorporés dans la région connectée, et
- déterminant que la zone d'extraction correspond à une zone entourant totalement la région connectée.

9. Procédé selon la revendication 8, dans lequel la distance de connexion est déterminée en fonction d'une direction de connexion, la direction de connexion étant plus particulièrement horizontale, verticale ou dans un sens de lecture supposé.

10. Procédé selon la revendication 7, 8 ou 9, dans lequel l'image de document d'entrée est convertie à une définition plus faible et les étapes de classement des pixels et de détermination d'une zone d'extraction sont mises en oeuvre sur l'image de plus faible définition.

11. Procédé selon la revendication 8, comprenant en outre l'adaptation automatique de la distance de connexion en réponse à un complément ajouté à la commande de sélection, dans lequel le complément ajouté à la commande de sélection comprend la désignation par l'utilisateur d'un autre point de sélection.

12. Procédé selon la revendication 8, comprenant en outre l'augmentation ou la diminution automatique de la distance de connexion en réponse à une commande supplémentaire de l'utilisateur, telle qu'un clic de souris ou l'activation d'une molette de souris.

13. Appareil de lecture optique permettant de balayer une image de document comprenant des éléments de mise en page de texte, tels que des mots ou des groupes de mots, ce qui permet de générer un fichier de balayage de données d'image comprenant des pixels, chacun ayant une valeur représentant l'intensité et/ou la couleur d'un élément d'image, comprenant :
- un lecteur optique (21) permettant de balayer l'image de document et de générer le fichier de balayage,
- un écran (23) permettant de visualiser au moins une partie de l'image pour un utilisateur,
- une interface utilisateur (25) permettant de recevoir de l'utilisateur une commande de sélection d'une zone d'extraction à l'intérieur de l'image de document balayée,
- une unité centrale (24) agissant pour
- convertir les éléments graphiques inclus dans la zone d'extraction en éléments de mise en page de texte en traitant les pixels
- extraire l'élément de mise en page de texte en traitant les pixels,
**caractérisé en ce que** l'unité centrale (24) agit également pour :
- déterminer automatiquement une zone d'extraction à l'intérieur de l'image balayée en se basant sur un point de sélection désigné par l'utilisateur dans un élément de mise en page de texte de l'image qui fait partie de la commande de sélection, et
- incorporer l'élément de misé en page de texte extrait dans un indicateur de fichier de balayage.

14. Appareil selon la revendication 13, dans lequel l'unité centrale (24) génère automatiquement un nom de fichier pour le fichier de balayage comprenant l'élément de mise en page extrait.

15. Appareil selon la revendication 13 ou 14, dans lequel l'unité centrale (24) génère automatiquement un message de courriel (e-mail) comprenant le fichier de balayage et comprend l'élément de mise en page de texte extrait dans le champ « objet » du message.

16. Appareil selon la revendication 13, dans lequel l'unité centrale (24) comprend un module de pré-traitement permettant de segmenter automatiquement au moins une partie de l'image balayée en éléments de mise en page basés sur les valeurs de pixels à caractère de premier plan ou à caractère d'arrière plan,
et dans lequel
l'unité centrale (24) détermine la zone d'extraction à l'intérieur de l'image balayée en se basant sur les résultats de segmentation du module de pré-traitement.

17. Appareil selon la revendication 13, dans lequel l'unité centrale (24) classe automatiquement les pixels en tant que pixels de premier plan en se basant sur leurs valeurs à caractère de premier plan, et
détermine la zone d'extraction à l'intérieur de l'image en se basant sur les pixels de premier plan connectés, par rapport à une distance de connexion prédéterminée, à un pixel de premier plan désigné par le point de sélection.

18. Programme informatique permettant de mettre en oeuvre, en coopération avec un appareil de lecture optique de documents, le procédé revendiqué dans l'une quelconque des revendications 1 à 12.

19. Programme informatique enregistré sur un support permettant de mettre en oeuvre, en coopération avec un appareil de lecture optique de documents, le procédé revendiqué dans l'une quelconque des revendications 1 à 12.
